# EUROPEAN PATENT SPECIFICATION

(11) **EP 3 046 095 B1**
(45) Date of publication and mention of the grant of the patent: **20.10.2021**
(21) Application number: 15464001.5
(22) Date of filing: 15.01.2015
(51) Int. Cl.: G09C 1/00, H04L 9/32

(54) **A method of protecting diverse applications stored on an integrated circuit using PUFs**
Verfahren zum Schutz verschiedener auf einer integrierten Schaltung gespeicherter Anwendungen unter Verwendung von PUFs
Procédé de protection de diverses applications stockées sur un circuit intégré en utilisant des PUFs

(43) Date of publication of application: 20.07.2016
(73) Proprietor: Siemens Aktiengesellschaft, 80333 München (DE)
(72) Inventor: Pitu, Ciprian-Leonard, 500371 Brasov (RO)
(74) Representative: Maier, Daniel Oliver

(56) References cited:
- WO-A1-2014/053286
- EMMANUEL OWUSU ET AL: "OASIS", COMPUTER & COMMUNICATIONS SECURITY, ACM, 2 PENN PLAZA, SUITE 701 NEW YORK NY 10121-0701 USA, 4 November 2013 (2013-11-04), pages 13-24, XP058034054, DOI: 10.1145/2508859.2516678 ISBN: 978-1-4503-2477-9
- SHIJUN ZHAO ET AL: "Providing Root of Trust for ARM TrustZone using SRAM PUFs", INTERNATIONAL ASSOCIATION FOR CRYPTOLOGIC RESEARCH,, vol. 20140625:034646, 25 June 2014 (2014-06-25), pages 1-12, XP061016339, [retrieved on 2014-06-25]
- None

## Description

The invention relates to a method of protecting diverse applications stored on an integrated circuit. The invention also relates to a silicon device for implementing the method.

Currently each silicon device respectively processor type has a dedicated architecture and thus instruction set. With matching compiler chain software various applications can be compiled to run on a specified silicon device.

There are different solutions to run critical applications in a way that is resistant to physical attacks. For instance, one can run critical applications in a sandbox environment (e.g. ARM TrustZone technology), regardless of hardware or software implemented. Critical applications could also be subject to complex security mechanisms implemented either in hardware or software (e.g. checksum, encryption, hashing, etc.).

High-security applications like smart-cards not only rely on complex security mechanisms, but also on a dedicated instruction set. In this case one has to accept a fixed instruction set which characterizes a family of silicon devices.

The patent application CA 2 229 242 A1 discloses a method for protecting confidential information on an integrated circuit, whereas the stored information is rendered by scrambling the values of the binary codes corresponding to the integrated circuit's instruction set. When appropriate, the codes are decoded by the integrated circuit's instruction decoder so that the intended function of the original (unscrambled) information is realized without revealing the information. Although this method is usable for protecting application codes it is difficult to handle. In particular, the implementation of diverse applications from different application developers requires excessive efforts in order to keep information of the circuit's manufacturer as well as information of the application developers confidential.

Emmanuel Owusu et al: "OASIS: On Achieving a Sanctuary for Integrity and Secrecy on Untrusted Platforms", Computer&Communications Security: Proceedings of the 2013 ACM SIGSAG conference on Computer&communications security, pages 13-24, November 2013. discloses an extension of a CPU instruction set for externally verifiable initiation, execution and termination of an isolated execution environment with a trusted computing base which consists solely of the CPU. This is achieved by leveraging Cache-as-RAM (CAR) mode execution and by creating a secret key that is only available to the CPU. The secret key derives e.g. from an SRAM PUF and is used as basis for symmetric keys for bulk encryption, authentication and asymmetric operation. The helper data used are generated during an init-step by the Hardware manufacturer and public - i.e., they are available to everyone using the device.

WO 2014/053286 A1 discloses a system and a method for generating a cryptographic key from a memory used as physically unclonable function (PUF). Said memory is configured such that each powering-up of the memory the memory settles into a memory content which depends upon at least partially random physical characteristic. The cryptographic key derives from the memory content into which the memory settled.

Zhao, Shijun et al: "Providing Root of Trust for ARM TrustZone using SRAM PUFs", International Association for Cryptologic Research; vol. 20140625:034646; pages 1-12, June 2014. discloses a design, implementation and evaluation of the root of trust for the Trusted Execution Environment (TEE) which is provided by ARM TrustZone based on SRAM Physical Unclonable Functions (PUFs).

It is an object of the invention to provide an improved method for protecting confidential information on an integrated circuit.

The invention provides a method of protecting diverse applications stored on an integrated circuit, comprising:
- issuing, for each application, a different challenge to a PUF device in order to derive a unique PUF response for each application;
- generating, for each application, different helper data using the corresponding PUF response and a respective application key;
- scrambling, for each application, the values of the binary codes corresponding to the integrated circuit's instruction set by using the corresponding helper data;
- encrypting each application with the respective application key subsequent to scrambling; or
- reconstructing for the respective application, the respective application key based on the corresponding PUF response and the corresponding application key;
- decrypting the respective application with the corresponding application key;
- performing a check-sum verification subsequent to decrypting the respective application; and
- during execution of the respective application, wherein said helper data are used to provide a modified compiler tool-chain comprising an instruction set with said scrambled binary codes which represent the available instructions, loading the helper data in the compiler tool-chain in order to generate a correct unique instruction set in order to de-scramble the instruction set used for compiling the application.

For each application a unique response is challenged by means of a Physical Unclonable Function (PUF). With this unique PUF response and a unique application key a unique helper data is generated for each application. The respective helper data is used by the manufacturer of the integrated circuit respectively silicon device to provide a modified compiler tool-chain comprising an instruction set with scrambled binary codes which represent the available instructions. Therefore, each application is secured by using a unique instruction set.

The using of the PUF device enables strong security and protection even against complex security attacks such as laser beam attacks. There are no two identical silicon devices; therefore PUFs are ideal for security critical applications. Each silicon chip can be individually characterized and therefore identified.

Furthermore, the method comprises encrypting of each application with the respective application key subsequent to scrambling, and prior to de-scrambling the method comprises reconstructing the respective application key based on the corresponding PUF response and the corresponding helper data in order to decrypt the respective application with the reconstructed application key.

In this setting the manufacturer of the silicon device holds the helper data and the application developer holds the application key used to encrypt the application.

Thus, each application is additionally protected by means of encryption. Even if the application is decrypted it cannot be reverse engineered as the instruction set is unknown.

Furthermore, subsequent to encrypting it is advantageous to store each application in a dedicated area of a non-volatile memory. During manufacturing, the silicon device is loaded with the software applications for which this dedicated memory space is allocated. Thus, the memory controller is aware of the address space occupied by each application.

For a method with encrypted applications it is advantageous to perform check-sum verification after decrypting the respective application. If a falsification occurs, the execution of the application is blocked. Preferably a reset signal is generated in order to reset the integrated circuit.

In order to render repeatable values of a PUF response most physical unclonable functions require an error correction after challenging. This is particularly the case for silicon PUFs of the integrated circuit.

During manufacturing it is advantageous if an enrolment module of the PUF device is physically disabled subsequent to the generation of each helper data. Thus, the respective helper date is not reproducible.

In a preferred embodiment of the method the binary codes of the respective application are scrambled with the corresponding helper data by using the XOR operator and the binary codes are de-scrambled with the corresponding helper data by using the XOR operator. This is a practicable approach in order to perform the scrambling and de-scrambling with little computing power.

A proposed silicon device, which is set up to implement one of the methods described above, comprises: a processor with a memory controller, an instruction fetcher, an instruction decoder with an instruction reconstructor, a register and an Arithmetic and Logic Unit; a non-volatile memory; and a PUF device with an enrolment module.

Using hardware based components enables the silicon device to offer similar performance levels as compared to an un-secured silicon device. Also the impact on software development is minimal as the respective instruction set is mostly transparent to the developer itself.

Furthermore, in an improved silicon device the memory controller is set up to decrypt the respective application and the instruction reconstructor is set up to de-scramble the binary codes of the respective application.

These and other aspects and advantages will become more apparent and more readily appreciated from the following description of the exemplary embodiments, taken in conjunction with the accompanying drawings of which:
- Fig. 1: is a silicon device structure;
- Fig. 2: is a block diagram of an application key enrolment;
- Fig. 3: is a block diagram of an application execurtion.

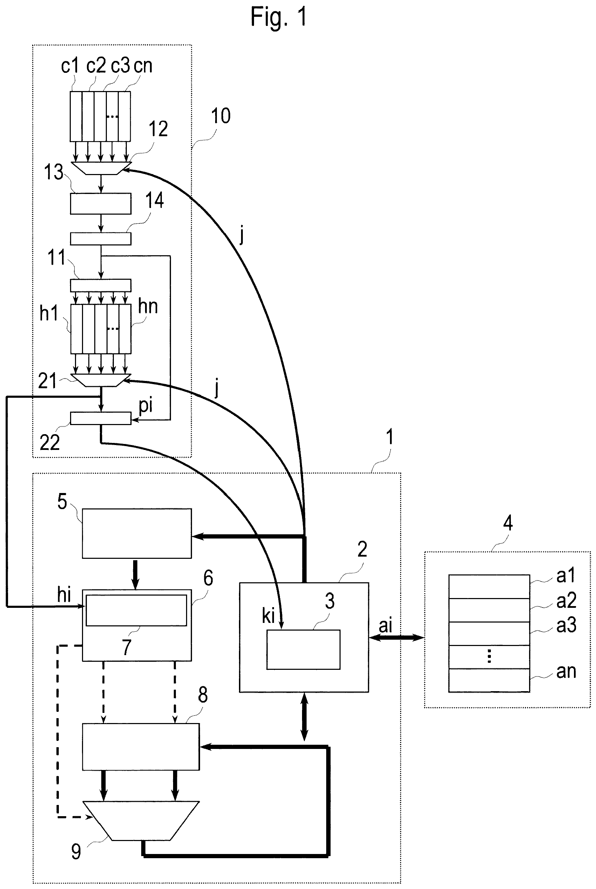

Figure 1 shows a processor 1 (CPU), which comprises a memory controller 2 with a decryption unit 3. The memory controller 2 reads and writes data from memory for the instructions. Connected to the memory controller 2 is a non-volatile memory 4 with dedicated memory space for diverse applications a1...an.

Additionally, the processor 1 comprises an instruction fetcher 5, an instruction decoder 6 with an instruction reconstructor 7, registers 8 and an Arithmetic and Logic Unit 9 (ALU). The instruction fetcher 5 reads instructions from memory 4 by means of the memory controller 2. The instruction decoder 6 decides what type of instruction is being executed, and fetches data from memory 4 if necessary. The registers 8 are the fast on-chip memory. The ALU 9 executes arithmetic and logical instructions.

A separate PUF device 10 is connected to the processor 1. The silicon Physical Unclonable Function (PUF) utilizes the fact that no integrated circuit (IC) is similar to another because of production process variations. E.g., path delays vary enough across ICs to use them for identification. It provides an output which looks like a random function. This output is unpredictable even for an attacker with physical access.

During manufacturing of the silicon device an enrolment phase is preformed. For this purpose the PUF device 10 comprises an enrolment module 11. For each application a1...an a unique challenge c1...cn is issued. These challenges cl...cn are multiplexed by a multiplexer 12 and provided to the actual PUF 13, which derive multiplexed PUF responses p1...pn. By means of a correction module 14 the PUF responses p1...pn are rendered repeatable.

By use of a unique application key k1...kn for each application al ...an and of the corresponding PUF response p1...pn the helper data h1...hn is generated and stored on chip. The process is repeated for each application a1...an resulting in as many helper data h1...hn packets as applications a1...an. After this phase the enrolment module 11 is physically disabled and cannot be used to generate new or additional helper data or to read out the helper data h1...hn.

During an implementation of the applications a1...an each application developer receives the compiler tool-chain and the corresponding helper data h1...hn from the silicon device manufacturer. The helper data h1...hn is loaded in the compiler tool-chain in order to generate a correct unique instruction set. After compilation each application a1...an is encrypted with the corresponding application key kl...kn and loaded on chip. Thus, each silicon device and each application is uniquely identifiable minimizing the impact of reverse engineering and/or security attacks.

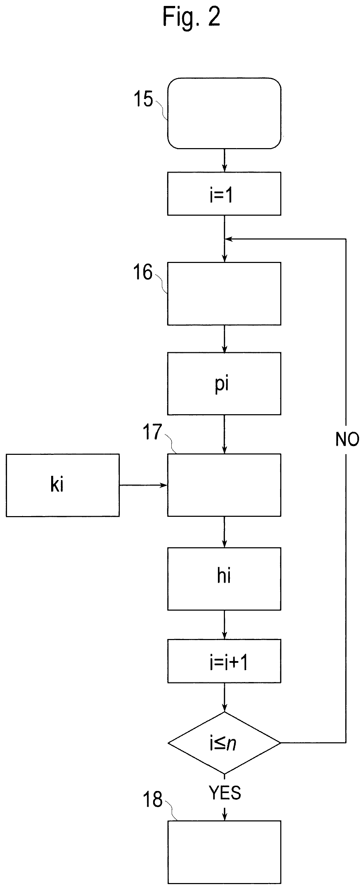

Figure 2 shows the enrolment process in detail. An initial command 15 starts the process by setting a counter i equal one. Subsequently a challenging step 16 is performed, issuing the corresponding challenge ci to the PUF 13. As result a raw PUF answer pi is derived. The PUF answer pi, which is preferably error corrected, is used together with the corresponding application key ki to perform the enrolment 17 of the corresponding application ai.

The enrolment 17 provides the corresponding helper data hi, which is stored on chip. Afterwards, the counter i is increased by one and if the resulting counter i is less or equal to the number of applications n, a further enrolment process is performed for the next application. But if the counter i is greater than the number of applications n, the enrolment process is stopped and a disable mechanism 18 renders the enrolment module 11 physically useless.

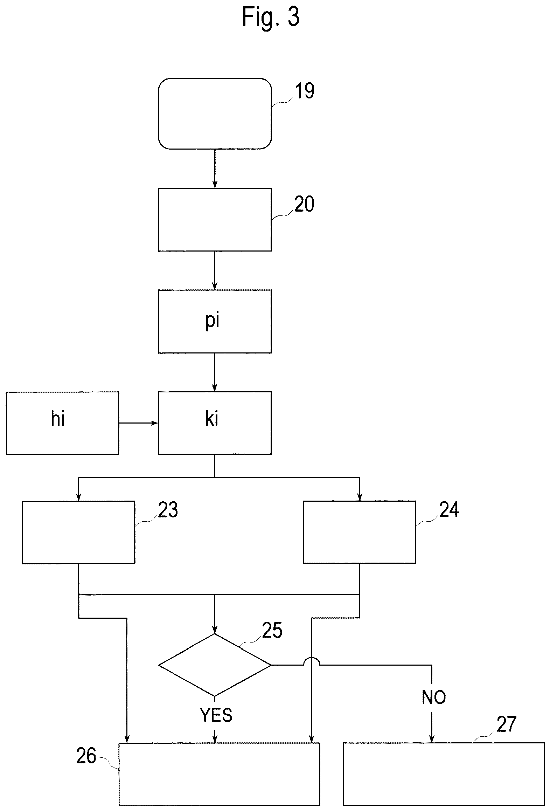

The execution of an application a1...an is shown in Figure 3, whereby the memory controller 2 selects one by one the applications a1...an to run. In a first step 19 the designated application ai is loaded by selecting the corresponding memory address space by. The data flow is indicated in Figure 1 with arrows.

The next event 20 concerns the issuing of the corresponding challenge ci. For this purpose the challenge ci is provided to the PUF device 10 in Figure 1 by sending a command j, which refers to counter number i of the application ai, to the multiplexer 12. By means of the PUF device 10 the raw PUF answer pi is processed. The corresponding helper data hi is provided to the PUF device 10 by sending the command j to the second multiplexer 12. The helper data hi and the PUF response pi are used to reconstruct the corresponding application key ki by means of a key reconstructor 22. The key ki is transmitted to the decryption unit 3 in order to perform the decrypting 23 of the application ai.

By means of the instruction reconstructor 7 a parallel process 24 is performed in order to de-scramble the instruction set used for compiling application i. The results are checked with an appropriate algorithm 25 (e.g. check sum) in order to detect a decryption error. The execution 26 of the decrypted application ai starts by using the de-scrambled instruction set, if no error is detected. In case of an error a different action 27 takes place.

If the silicon device is subject to security attacks (e.g. DPA, ion or laser beam attacks, reverse engineering, excessive heating or cooling, etc.), the PUF response p1...pn changes; therefore the reconstructed key does not match the application key kl...kn. In this case the application a1...an cannot be decrypted and the system detects a security breach which needs to be properly handled. Issuing an alarm might be sufficient for some applications. If a stronger reaction is demanded, a resetting of the silicon device is appropriate.

## Claims

1. A method of protecting diverse applications (a1...an) stored on an integrated circuit, comprising:
issuing, for each application (a1...an), a different challenge (c1...cn) to a PUF device (10) in order to derive a unique PUF response (p1...pn) for each application (a1...an);
generating, for each application (a1...an), different helper data (h1...hn) using the corresponding PUF response (p1...pn) and a respective application key (k1...kn) and;
scrambling the values of the binary codes corresponding to the integrated circuit's instruction set by using the corresponding helper data (h1...hn) for each application (a1...an);
encrypting each application (a1...an) with the respective application key (k1...kn) subsequent to scrambling; or reconstructing, for the respective application (a1...an), the respective application key (k1...kn) based on the corresponding PUF response (p1...pn) and the corresponding helper data (h1...hn);
decrypting the respective application (a1...an) with the corresponding application key (k1...kn);
performing a check-sum verification subsequent to decrypting the respective application (a1...an) and;
during execution of the respective application (a1...an), wherein said helper data (h1...hn) are used to provide a modified compiler tool-chain comprising an instruction set with said scrambled binary codes which represent the available instructions, loading the helper data (h1...hn) in the compiler tool-chain in order to generate a correct unique instruction set in order to de-scramble the instruction set used for compiling the application (a1...an).

2. The method of claim 1, in which, subsequent to encrypting, each application (a1...an) is stored in a dedicated area of a non-volatile memory (4).

3. The method of claim 1, whereas in case of falsification a reset signal is generated in order to reset the integrated circuit.

4. The method of any one of claims 1 to 3, in which each PUF response (p1...pn) is error corrected.

5. The method of claim 4, in which the PUF device (10) utilizes silicon physical unclonable functions of the integrated circuit.

6. The method of any one of claims 1 to 5, in which an enrolment module (11) of the PUF device (10) is physically disabled subsequent to the generation of each helper data (h1...hn).

7. The method of any one of claims 1 to 6, in which the binary codes of the respective application (a1...an) are scrambled with the corresponding helper data (h1...hn) by using the XOR operator and in which the binary codes are de-scrambled with the corresponding helper data (h1...hn) by using the XOR operator.

## Patentansprüche

1. Verfahren zum Schutz verschiedener auf einer integrierten Schaltung gespeicherter Anwendungen (al...an), das Folgendes umfasst:
Ausgeben, für jede Anwendung (al...an), einer unterschiedlichen Aufforderung an eine PUF-Einrichtung (10), um eine eindeutige PUF-Antwort (pl...pn) für jede Anwendung (al...an) abzuleiten,
Erzeugen, für jede Anwendung (al...an), unterschiedlicher Helferdaten (hl...hn) unter Verwendung der entsprechenden PUF-Antwort (pl...pn) und eines jeweiligen Anwendungsschlüssels (kl...kn) und
Verwürfeln der Werte der dem Befehlssatz der integrierten Schaltung entsprechenden Binärcodes unter Verwendung der entsprechenden Helferdaten (hl...hn) für jede Anwendung (a1...an),
Verschlüsseln jeder Anwendung (al...an) mit dem jeweiligen Anwendungsschlüssel (kl...kn) im Anschluss an das Verwürfeln oder
Rekonstruieren, für die jeweilige Anwendung (al...an), des jeweiligen Anwendungsschlüssels (kl...kn) auf Grundlage der entsprechenden PUF-Antwort (pl...pn) und der entsprechenden Helferdaten (hl...hn),
Entschlüsseln der jeweiligen Anwendung (al...an) mit dem entsprechenden Anwendungsschlüssel (kl...kn),
Durchführen einer Prüfsummenverifikation im Anschluss an das Entschlüsseln der jeweiligen Anwendung (al...an) und
während der Ausführung der jeweiligen Anwendung (al...an), wobei die Helferdaten (hl...hn) verwendet werden, um eine abgewandelte Compiler-Werkzeugkette bereitzustellen, die einen Befehlssatz mit verwürfelten Binärcodes umfasst, die die verfügbare Befehle darstellen, Laden der Helferdaten (hl...hn) in die Compiler-Werkzeugkette, um einen korrekten eindeutigen Befehlssatz zu erzeugen, um den für die Kompilierung der Anwendung (al...an) verwendeten Befehlssatz zu entwürfeln.

2. Verfahren nach Anspruch 1, bei dem, im Anschluss an das Verschlüsseln, jede Anwendung (al...an) in einem dedizierten Bereich eines nichtflüchtigen Speichers (4) gespeichert wird.

3. Verfahren nach Anspruch 1, wogegen bei Verfälschung ein Rücksetzsignal erzeugt wird, um die integrierte Schaltung zurückzusetzen.

4. Verfahren nach einem der Ansprüche 1 bis 3, bei dem jede PUF-Antwort (pl...pn) fehlerkorrigiert ist.

5. Verfahren nach Anspruch 4, bei dem die PUF-Einrichtung (10) siliziumbasierte physikalisch unklonbare Funktionen der integrierten Schaltung nutzt.

6. Verfahren nach einem der Ansprüche 1 bis 5, bei dem ein Anmeldemodul (11) der PUF-Einrichtung (10) im Anschluss an die Erzeugung von jeden Helferdaten (hl...hn) physikalisch deaktiviert wird.

7. Verfahren nach einem der Ansprüche 1 bis 6, bei dem die Binärcodes der jeweiligen Anwendung (al...an) durch Verwenden des XOR-Operators mit den entsprechenden Helferdaten (hl...hn) verwürfelt werden und bei dem die Binärcodes durch Verwenden des XOR-Operators mit den entsprechenden Helferdaten (hl...hn) entwürfelt werden.

## Revendications

1. Procédé de protection de diverses applications (al à an) stockées sur un circuit intégré, comprenant :
la délivrance, pour chaque application (al à an), d'une sollicitation (c1 à cn) différente à un dispositif (10) à fonctions physiques non clonables, PUF, afin de déduire une réponse de PUF (p1 à pn) unique pour chaque application (al à an) ;
la génération, pour chaque application (al à an), de données auxiliaires (hl à hn) différentes à l'aide de la réponse de PUF (p1 à pn) correspondante et d'une clé d'application (k1 à kn) respective et ;
le brouillage des valeurs des codes binaires correspondant au jeu d'instructions du circuit intégré en utilisant les données auxiliaires (hl à hn) correspondantes pour chaque application (al à an) ;
le chiffrement de chaque application (al à an) avec la clé d'application (k1 à kn) respective à la suite du brouillage ; ou
la reconstruction, pour l'application (al à an) respective, de la clé d'application (k1 à kn) respective sur la base de la réponse de PUF (p1 à pn) correspondante et des données auxiliaires (hl à hn) correspondantes ;
le déchiffrement de l'application (al à an) respective avec la clé d'application (k1 à kn) correspondante ;
la réalisation d'une vérification de somme de contrôle à la suite du déchiffrement de l'application (al à an) respective et ;
pendant l'exécution de l'application (al à an) respective, lesdites données auxiliaires (hl à hn) étant utilisées pour fournir une chaîne d'outils de compilation modifiée comprenant un jeu d'instructions avec lesdits codes binaires brouillés qui représentent les instructions disponibles, le chargement des données auxiliaires (hl à hn) dans la chaîne d'outils de compilation afin de générer un jeu d'instructions unique correct afin de désembrouiller le jeu d'instructions utilisé pour la compilation de l'application (al à an).

2. Procédé selon la revendication 1, dans lequel, à la suite du chiffrement, chaque application (al à an) est stockée dans une zone dédiée d'une mémoire non volatile (4).

3. Procédé selon la revendication 1, où en cas de falsification, un signal de réinitialisation est généré afin de réinitialiser le circuit intégré.

4. Procédé selon l'une quelconque des revendications 1 à 3, dans lequel chaque réponse de PUF (p1 à pn) a subi une correction d'erreur.

5. Procédé selon la revendication 4, dans lequel le dispositif à PUF (10) utilise des fonctions physiques non clonables sur silicium du circuit intégré.

6. Procédé selon l'une quelconque des revendications 1 à 5, dans lequel un module d'enrôlement (11) du dispositif à PUF (10) est physiquement désactivé à la suite de la génération de chacune des données auxiliaires (hl à hn).

7. Procédé selon l'une quelconque des revendications 1 à 6, dans lequel les codes binaires de l'application (al à an) respective sont brouillés avec les données auxiliaires (hl à hn) correspondantes en utilisant l'opérateur de disjonction exclusive, XOR, et dans lequel les codes binaires sont désembrouillés avec les données auxiliaires (hl à hn) correspondantes en utilisant l'opérateur XOR.
